# EUROPEAN PATENT APPLICATION

(11) **EP 1 480 146 A2**
(43) Date of publication of application: **24.11.2004**
(21) Application number: 04251877.9
(22) Date of filing: 30.03.2004
(51) Int. Cl.: G06F 17/60

(54) **Price revising system**

(30) Priority: 31.03.2003 JP 2003094534
(71) Applicant: NISSAN MOTOR COMPANY, LIMITED, Yokohama-shi, Kanagawa 221-0023 (JP)
(72) Inventor: Kimata, Nobuto, Ebina-shi Kanagawa 243-0422 (JP); Nakamura, Takeaki, Fujisawa-shi Kanagawa 251-0002 (JP)
(74) Representative: Godwin, Edgar James

(57) **Abstract**

A price revising system is devised to assist a purchaser to revise a trading contract on a commodity when the prices of materials, parts, etc. for a commodity changes due to changes in market conditions. The price revising system supports the trading contract by presenting a display prompting the entry of the selling party data (step ST1), the commodity, and a price fluctuation amount and calculating the monetary effect of the selling party for a case in which the price of the commodity is changed according to the fluctuation amount (step ST2). The price revising system then allows the ordering party to check the monetary effect, thereby aiding in the decision of whether or not to execute the price revision thereafter (step ST3). The price revising system then creates detailed price data that has been revised according to the fluctuation amount for commodities regarding which a contract for commodity delivery has been established between the selling party and the ordering party (step ST5), presents a display prompting the selling party to approve the price revision (step ST7), and executes the price revision in accordance with information indicating that the selling party has approved the price revision (step ST8).

## Description

The present invention relates to a price revising system for revising the prices of materials, parts, etc., in a purchasing system that is used for the purchase of materials, parts, etc., for manufacturing products.

Presently, there are known purchasing systems, whereby a product manufacturer's terminal and a parts manufacturer's terminal are connected through a server so that a buyer of the product manufacturer can purchase materials and parts required for the manufacture of a product.

One such purchasing system is disclosed in Japanese Laid-Open Patent Publication No. 10-187834. The purchasing system disclosed in this Japanese Laid-Open Patent Publication is designed to reduce the work load associated with procuring materials and parts by allowing a buyer of the product manufacturer to use a terminal to issue orders for materials and parts and set prices between the product manufacturer and the parts manufacturer.

In view of the above, it will be apparent to those skilled in the art from this disclosure that there exists a need for an improved price revising system and method. This invention addresses this need in the art as well as other needs, which will become apparent to those skilled in the art from this disclosure.

It has been discovered that with the conventional purchasing system described above, it is possible to perform such purchasing management tasks as providing estimates, setting prices, and confirming contracts. However, when it is necessary, for example, to change previously established prices due to changes in the state of the market, these pricing changes in the unit price of each material and/or part must be entered by hand. In short, such conventional purchasing systems do not support automatic and quick updates of prices.

The present invention was conceived in view of these circumstances. One object of the present invention is to provide a price revising method and price revising system that can revise prices quickly and automatically when the cost of a commodity unit (materials, parts etc.) that affect the prices of items being sold has change due to market conditions. As used herein, the term "cost parameter" refers to an identifiable factor affecting the cost of producing a commodity or product being sold.

According, the present invention basically provides a price revising method for assisting an ordering party and a selling party to revise a contract on a commodity. The price revising method comprises displaying information to the ordering party prompting entry of the selling party, the commodity, and a price fluctuation amount relating to at least commodity unit; calculating a monetary effect of the selling party for a case in which the price of the commodity is changed according to the fluctuation amount; revising detailed price data according to the fluctuation amount to create a price revision for the commodity with respect to an existing order for delivery of the commodity that has been established between the selling party and the ordering party; sending the price revision to the selling party for approval of the price revision; and executing the price revision to the existing order by the ordering party in compliance with information indicating that the selling party has approved the price revision.

These and other objects, features, aspects and advantages of the present invention will become apparent to those skilled in the art from the following detailed description, which, taken in conjunction with the annexed drawings, discloses a preferred embodiment of the present invention.

Referring now to the attached drawings which form a part of this original disclosure

Figure 1 is a block diagram showing a configuration of a purchasing work support system utilizing a price revising system in accordance with one embodiment of the present invention;

Figure 2 is a block diagram showing the main functions of the ordering part terminal and the selling party terminals in the purchasing work support system in accordance with the embodiment of the present invention illustrated in Figure 1;

Figure 3 is a flowchart illustrating the preparation and execution of market-based revisions in a price revising system in accordance with the embodiment of the present invention illustrated in Figures 1 and 2;

Figure 4 illustrates the main menu presented to the purchasing agent when market-based revisions are made in a price revising system in accordance with the embodiment of the present invention illustrated in Figures 1-3;

Figure 5 illustrates a screen prompting the user to set market-based revision parameters in a price revising system in accordance with the embodiment of the present invention illustrated in Figures 1-4;

Figure 6 illustrates a screen prompting the user to enter descriptive settings for a market-based revision parameter in a price revising system in accordance with the embodiment of the present invention illustrated in Figures 1-5; and

Figure 7 illustrates a screen that enables market-based revision parameters to be stored and reviewed as market-based revision data in accordance with the embodiment of the present invention illustrated in Figures 1-6.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

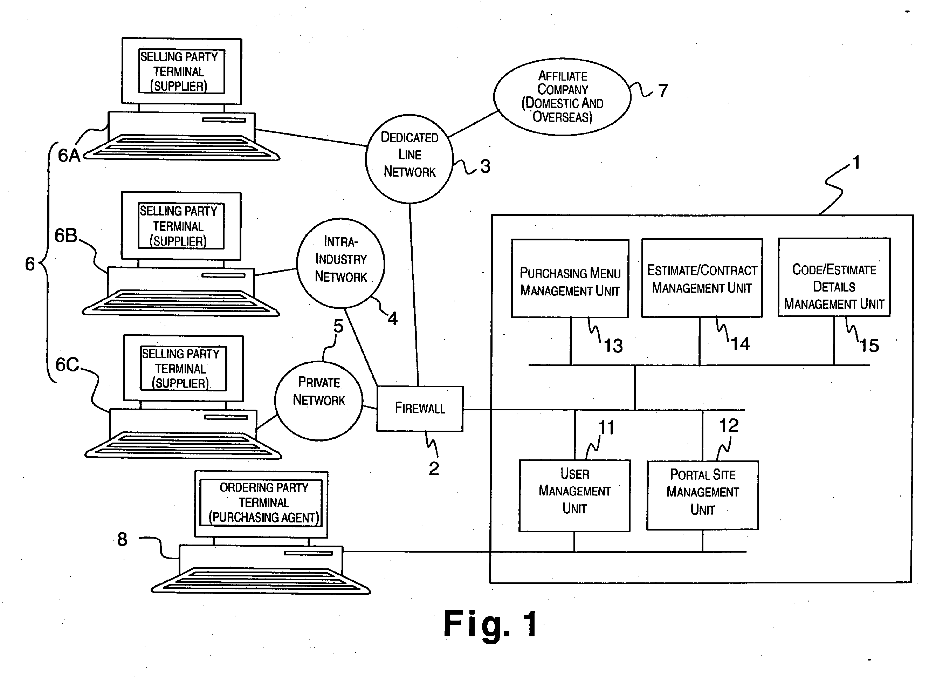

Referring initially to Figure 1, a purchasing work support system is illustrated in accordance with a first embodiment of the present invention. This purchasing work support system is particularly useful in the automobile manufacturing industry in which a trading contract or order for automobile parts is based on various cost parameters or commodity unit such as material costs, component parts costs, processing cost, mold costs, management costs and/or profit margin. As explained later, this purchasing work support system is configured and arranged to allow an ordering or a purchasing party, such as an automobile manufacturer, to revise an existing contract with a selling party, such as a parts manufacture for a prior order or a future order of a commodity such as automobile parts. In other words, once the purchasing party (e.g., automobile manufacturer determines that the cost of materials or other cost parameters has changed due to a change in market conditions, the purchasing party uses the purchasing work support system of the present invention to quickly revise a contract or order in view of the change in market conditions. As explained below in more detail, the purchasing work support system includes a price revising system that calculates a monetary effect and a part specific price revision for each selling party and product. Thus, using the price revising system of the present invention, the product manufacturer can quickly negotiate a revised price for existing orders and/or future orders.

As seen in Figure 1, this purchasing work support system basically comprises communication circuits connecting a product manufacturer (ordering or purchasing party) to one or more selling parties or suppliers. The product manufacturer (ordering or purchasing party) orders materials and parts for manufacturing products from selling parties (suppliers) that supplies the materials and parts in response to orders issued by the product manufacturer. As mentioned above, the purchasing work support system has a price revising system that is devised to assist a purchaser to revise a trading contract on a commodity when the prices of materials, parts, etc. (cost parameters) for a commodity changes due to changes in market conditions. Thus, for example, the automobile parts buyer (ordering or purchasing party) and the automobile parts supplier (selling party) interact based on material-specific price fluctuation data to make individual adjustments to a contract regarding the revised price (i.e., the fluctuation amount, the date of the revised price, and whether or not to execute the revised contract) and a final decision. In other words, when the product manufacturer (ordering or purchasing party) determines that a market condition regarding a cost parameter has changed that will affect the cost of the materials and/or parts being ordered from one or more of the selling parties (suppliers) of those materials and/or parts, the product manufacturer (ordering or purchasing party) will input price fluctuation data that is indicative of the changes in the market condition into purchasing work support system. The purchasing work support system will then calculate a monetary effect for each contract based on the price fluctuation data. This monetary effect will be communicated to one or more of the selling parties (suppliers) of those materials and/or parts (commodities) affected by the change in the market condition. Next, the purchasing work support system will calculate the revised price(s) for the materials and/or parts affected by the change in the market condition. The revised price(s) for the materials and/or parts affected by the change in the market condition are communicated to one or more of the selling parties (suppliers) of those materials and/or parts affected by the change in the market condition. The one or more of selling parties (suppliers) of those materials and/or parts affected by the change in the market condition can now approve or reject the proposed revision to the contract based on the monetary effect. Depending on the relationship between the product manufacturer (ordering or purchasing party) and the selling parties (suppliers), the revised price(s) can be retroactively applied for a current supply period or can be applied to the next or a future supply period.

In summary, the present invention allows the following tasks to be performed in order to support a contract between an ordering or purchasing party and a selling party regarding the issuance of an order for a commodity to the selling party and the delivery of the commodity to the ordering party: (1) presenting a display for prompting the entry of the selling party, the commodity, and a price fluctuation amount; and (2) calculating the monetary effect to the selling party for a case in which the price of the commodity has changed according to the entered fluctuation amount. Thus, the present invention allows the ordering party and the selling party to check the monetary effect, which aids the ordering party and the selling party in the decision of whether or not to execute the contract for a price revision.

Also, with the present invention, when a price revision is executed, detailed price data that has been revised according to the fluctuation amount is created for each commodity which a contract for commodity delivery has been established between the selling party and the ordering party. This detailed price data is sent from the ordering party to the selling party through the purchasing work support system. Then, a display prompting approval of the price revision is presented to the selling party. The price revision can now be executed in compliance with information indicating that the selling party has approved the price revision back to the ordering party. In situations where the price of a commodity had fluctuated and the sales price has been affected, the present invention makes it possible to negotiate a price revision quickly and automatically by conducting a calculation of the monetary effect for aiding in the ordering party's decision regarding the price revision.

More specifically, the price revising system basically includes a purchasing support server 1 connected by a firewall 2 to a dedicated line network 3, an intra-industry network 4, and a private network 5. The price revising system further includes a plurality of selling party terminals 6A to 6C (collectively referred to as "selling party terminals 6") of the selling parties, one or more affiliate company (foreign and domestic) terminals 7 (only one shown) and an ordering party terminal 8.

The purchasing support server 1 and the ordering party terminal 8 form a purchasing apparatus. While the ordering party terminal 8 is illustrated as being directly connected to the purchasing support server 1, it will be apparent from this disclosure that the ordering party terminal 8 can be remotely located from the purchasing support server 1, i.e., connected through the internet or other networks. The purchasing support server 1 has data of all existing trading contract or order stored therein. The stored contracts or orders are stored such that individual cost parameters of each contract or order can be manipulated to adjust a price per unit for a commodity or product. Also the purchasing support server 1 is configured and arranged to obtain the commodity or commodities to be ordered from seller data stored in a database, and a price fluctuation amount, which will be used by the purchasing support server 1 to calculate a revised price for each of the sellers of the commodity or commodities in accordance with the data of the commodity and the price fluctuation amount. Thus, the purchasing support server 1 is configured and arranged to revise the data of the trading contract upon receiving an approval of the revised price, and to send the revised pricing to one or more of selling party terminals 6A to 6C (approving apparatuses) that are electronically connected to the purchasing support server 1. The selling party terminals 6A to 6C (approving apparatuses) are configured and arranged to receive the revised price, to obtain from the seller the approval of the revised price, and to send the approval to the purchasing support server 1. The purchasing support server 1 is further configured and arranged to send the approval to the ordering party terminal 8 upon obtaining the approval from the seller or sellers.

As explained later in more detail, the purchasing support server 1 preferably is configured and arranged to form the price revising system that contains a price revising control program for quickly and automatically revising pricing of an existing contract between a seller and a purchaser when the prices of materials, parts, etc. (commodity units or cost parameters) used in manufacturing products or commodities change due to market conditions. In other words, the price revising system is configured and arranged to allow the purchasing agent to renegotiate an existing contract or order to obtain a reduced price of the products or commodities being ordered but not yet delivered. For example, if a purchasing party has a contract or an order for purchasing a product or commodity A with one or more sellers (suppliers), then the price revising system of the present invention is used by the purchaser to recalculate the contract price based on a change in market conditions, e.g., fluctuations in costs of the materials, parts, etc. (commodity units or cost parameters) used in manufacturing the commodity A. The price revising system of the present invention then determines the monetary effect to a contract between the parties if the contract is revised to take into account the price fluctuation of the materials, parts, etc. (commodity units or cost parameters) used in manufacturing the commodity A. Next, the price revising system of the present invention produces a revised contract data for creating the revised contract, which includes the revised pricing for the existing order or contract in view of changes in market conditions.

In particular, the purchasing support server 1 has stored various data on existing orders and/ contracts pertaining to pricing of the product or commodity A. The purchasing agent or party inputs into the purchasing support server 1 at least one price fluctuation amount for at least one cost parameter that is indicative of a change in market conditions and that pertains to the pricing of the product or commodity A. The price revising system will calculate and output a monetary effect based on the price fluctuation amount and a revised pricing for purchasing the commodity A according to the price fluctuation amount. The monetary effect and the revised pricing of the contract due to the price fluctuation amount are then communicated automatically or manually to one or more sellers (suppliers). Preferably, the price revising system of the present invention is configured to allow the purchasing agent (ordering party) to determine whether or not the monetary effect and the revised pricing should be communicated or not and to whom this information should be communicated. In other words, the price revising system of the present invention is configured such that the purchasing agent (ordering party) must approve communicating the monetary effect to one or more sellers (suppliers). More preferably, the price revising system of the present invention is configured such that the purchasing agent (ordering party) can select either one or more specific sellers (suppliers) that should receive the communication regarding the monetary effect, or select all sellers (suppliers) that supply the commodity to receive the communication regarding the monetary effect. Thus, preferably when the price revision has been approved by the purchasing agent (ordering party), the price revising system will automatically send an e-mail on behalf of the purchasing agent (ordering party) to one or more of the sellers (suppliers) of the commodity A with a request that the prior or future contract be revised (reduced in price) in view of the changes in the market conditions for manufacturing the commodity A. This e-mail will include the monetary effect on the existing or future contract. In other words, the sellers (suppliers) are in formed on an individual basis of the monetary effect of the price fluctuation amount will have on the contract. If the revised pricing for the commodity A is accepted by the sellers or suppliers of the commodity A, then the purchasing agent will receive confirmation from the acceptance by the seller or sellers via the price revising system. The revised pricing will then be stored in the purchasing support server 1.

In summary, the price revising system has a purchasing apparatus (server 1 and terminal 8) with data of the trading contracts and other relevant data necessary to revise the pricing of a contract based on a change in a cost parameter of a commodity. The purchasing apparatus is configured to obtain from the purchaser data of the seller, the commodity and a price fluctuation amount, to calculate a revised price in accordance with the data of the commodity and the price fluctuation amount, and to revise the data of the trading contract upon receiving an approval of the revised price. An approving apparatus (terminal 6A to 6C) is electronically connected to the purchasing apparatus. The approving apparatus is configured to receive the revised price, to obtain from the seller the approval of the revised price, and to send the approval to the purchasing apparatus upon obtaining the approval from the seller.

More specifically, as seen in Figure 1, the product manufacturer has the purchasing support server 1 that includes a user management unit or section 11, a portal site management unit or section 12, a purchasing menu management unit or section 13, an estimate/contract management unit or section 14, and a code/estimate details management unit or section 15. These units or sections 11 to 15 are configured and arranged as either a single server device or a plurality of individual function-specific server devices that includes one or more of the functions of the units 11 to 15. These units 11 to 15 are preferably connected together by an internal bus inside the purchasing support server 1.

Thus, the purchasing support server 1 preferably includes a microcomputer with a price revising control program and a purchasing control program that carries out the present invention as discussed below. The control unit of the purchasing support server 1 can also include other conventional components such as an input interface circuit, an output interface circuit, and storage devices such as a ROM (Read Only Memory) device and a RAM (Random Access Memory) device. In other words, the units 11 to 15 are made up of such items as the following: a memory unit for storing purchasing work support programs for executing a purchasing work support service and various information for providing the purchasing work support service; and a CPU (central processing unit) that provides the purchasing work support service by executing the purchasing work support program and using the various information stored in the memory unit.

It will be apparent to those skilled in the art from this disclosure that the precise structure and algorithms for the units 11 to 15 can be any combination of hardware and software that will carry out the functions of the present invention. In other words, "means plus function" clauses as utilized in the specification and claims should include any structure or hardware and/or algorithm or software that can be utilized to carry out the function of the "means plus function" clause.

The purchasing support server 1 is connected to the ordering party terminal 8 that is operated by the ordering party (a purchasing agent, a buyer, a buying agent or the like) in order to execute purchasing work orders. The ordering party terminal 8 accesses the purchasing work support service via the portal site management unit 12. When the ordering party terminal 8 accesses the purchasing support server 1, the portal site management unit 12 prompts the entry of a user ID and password. After the user management unit 11 executes user verification, the ordering party is allowed to use the purchasing work support service provided by the purchasing menu management unit 13, the estimate/contract management unit 14, and the code/estimate details management unit 15. The details of the purchasing work support service provided by the purchasing menu management unit 13, the estimate/contract management unit 14, and the code/estimate details management unit 15 will be discussed later.

As mentioned above, the user management unit 11 is connected through a firewall 2 to the dedicated line network 3, the intra-industry network 4, and the private network 5. Through these networks 3 to 5, the user management unit 11 can communicate with the selling party terminals 6 (e.g., terminals 6A to 6C) of the selling parties and/or the affiliate company terminal 7.

The user management unit 11 and the portal site management unit 12 function as a common infrastructure for the ordering party terminal 8 and the external terminals 6 and 7. The user management unit 11 and the portal site management unit 12 also execute user management processing when the terminals 6 and 7 use the purchasing work support service provided by the purchasing support server 1. In other words, when a selling party terminal 6 exchanges information with the ordering party terminal 8 using the purchasing menu management unit 13, the estimate/contract management unit 14 and the code/estimate details management unit 15, then the portal site management unit 12 first prompts entry of the user ID and password on the selling party terminal 6 such that the user management unit 11 executes user verification.

With the purchasing support server 1 in this kind of purchasing work support system, when the ordering party terminal 8 or the selling party terminal 6 accesses the purchasing support server 1 and completes the user verification, the purchasing menu management unit 13 displays a main menu for receiving purchasing work support service on the ordering party terminal 8 or selling party terminal. The estimate/contract management unit 14 and the code/estimate details management unit 15 are operated when the ordering party terminal 8 or the selling party terminal 6 selects a menu item.

The estimate/contract management unit 14 executes processing for inquiring or replying regarding the conditions related to the materials or parts to be ordered. The estimate/contract management unit 14 also executes processing for requesting and receiving estimates, and processing for setting prices and establishing contracts. The code/estimate details management unit 15 executes code management processing for managing ordering party codes, selling party codes, material codes, part codes, and contract codes. The code/estimate details management unit 15 also estimates details management processing for managing the estimate details (e.g., the cost parameters) related to established contracts.

Since this purchasing work support system employs the present invention, this purchasing work support system quickly and automatically updates the prices of materials and parts for which prices have already been set and contracts already established, the updates being made in accordance with market conditions. This characteristic will now be described in detail.

### Ordering Party Terminal and Selling Party Terminal

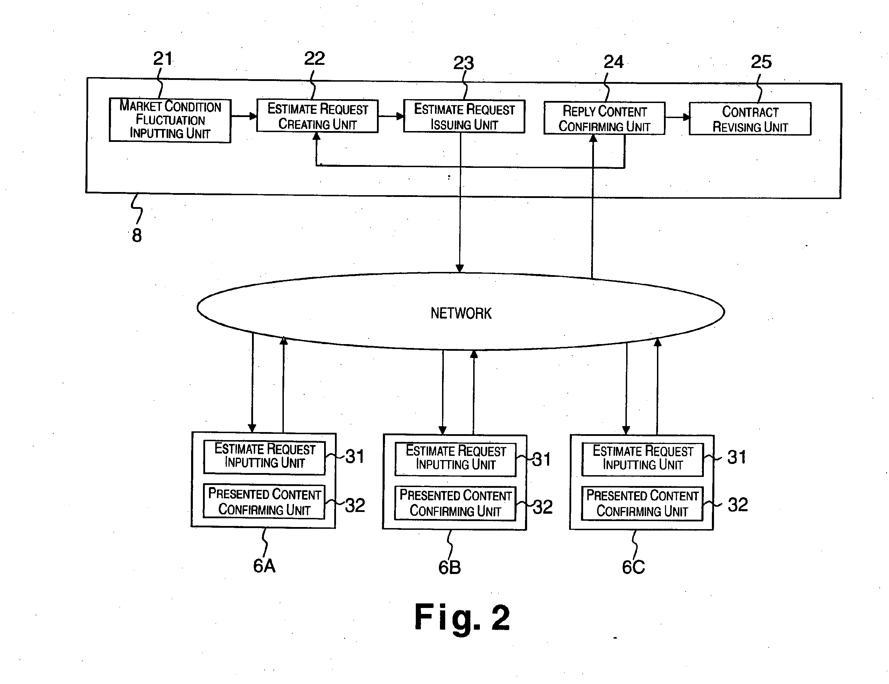

An example of the constituent functions of the ordering party terminal 8 and the selling party terminals 6 of the price revising system just described will now be described with reference to Figure 2. The various units or sections inside the ordering party terminal 8 and the selling party terminals 6 shown in Figure 2 indicate the different functions that are achieved by running the programs inside the ordering party terminal 8 and the selling party terminals 6. The ordering party terminal 8 and the selling party terminals 6 are each preferably a personal computer or the like that is configured and arranged with the necessary hardware and software to carry out the present invention.

The ordering party terminal 8 preferably includes a market condition fluctuation inputting unit or section 21, an estimate request creating unit or section 22, an estimate request issuing unit or section 23, a reply content confirming unit or section 24, and a contract revising unit or section 25. The market condition fluctuation inputting unit or section 21 preferably includes an inputting device such as, for example, a keyboard and/or a mouse or the like. The estimate request creating unit or section 22 is preferably, for example, configured and arranged to use the processing of the estimate/contract management section 14 of the purchasing support server 1.

After the ordering party terminal 8 accesses the portal site management unit 12 and the use of the functions/processing of the purchasing menu management unit 13 and the estimate/contract management unit 14 has been permitted in response to verification of the user by the user management unit 11, then the market condition fluctuation inputting unit 21 can be operated by the purchasing agent in order to specify various cost parameters related to market prices of one or more commodities or products to be purchased. Then, after the cost parameters related to the market prices have been entered, the market condition fluctuation input unit 21 sends the information to the estimate request creating unit 22 for outputting the monetary effect to contracts that are affect by the cost parameters.

After an agreement has been obtained between the ordering party terminal 8 and the selling party terminal 6 regarding the quantity and quality of materials or parts to be purchased, the estimate request creating unit 22 creates a request with estimate request information that is sent from the ordering party terminal 8 to the selling party terminal 6. The estimate request information will be discussed in more detail later, but it essentially constitutes a request from the ordering party to the selling party (at selling party terminal 6) to provide estimates of the quantity of materials or parts to be purchased, the unit prices of the same, and the total price based on the various cost parameters related to the market price entered using the market condition fluctuation input unit 21.

The estimate request issuing unit 23 then transmits the estimate request information created by the estimate request creating unit 22 to the respective selling party terminal 6 through one of the networks 3 to 5. In this way, the ordering party terminal 8 issues estimate request information to the selling party terminal 6.

The selling party terminal 6 receives the estimate request information and presents it to a user at the selling party by prompting the user to enter an estimate reply. The user enters an estimate reply into the selling party terminal 6 using the estimate reply inputting unit 31 and the presented content confirming unit 32 prompts the user to check the content that was entered. The estimate reply information is then created and sent back from the selling party terminal to the ordering party terminal 8.

When the ordering party receives the estimate replay information (which was sent from the selling party terminal 6 in response to an estimate request sent to the selling party terminal 6 from the estimate request issuing unit 23), the reply content confirming unit 24 prompts the user to check the content using a display mechanism (not shown in the figures).

After the estimate reply information is received by the reply content confirming unit 24 and checked by the user, the contract revising unit 25 executes processing to revise the existing contract such that the prices are revised in accordance with the cost parameters that reflect the price fluctuation amount due to the changes in the market conditions.

### Price Revision Processing According to Market Conditions

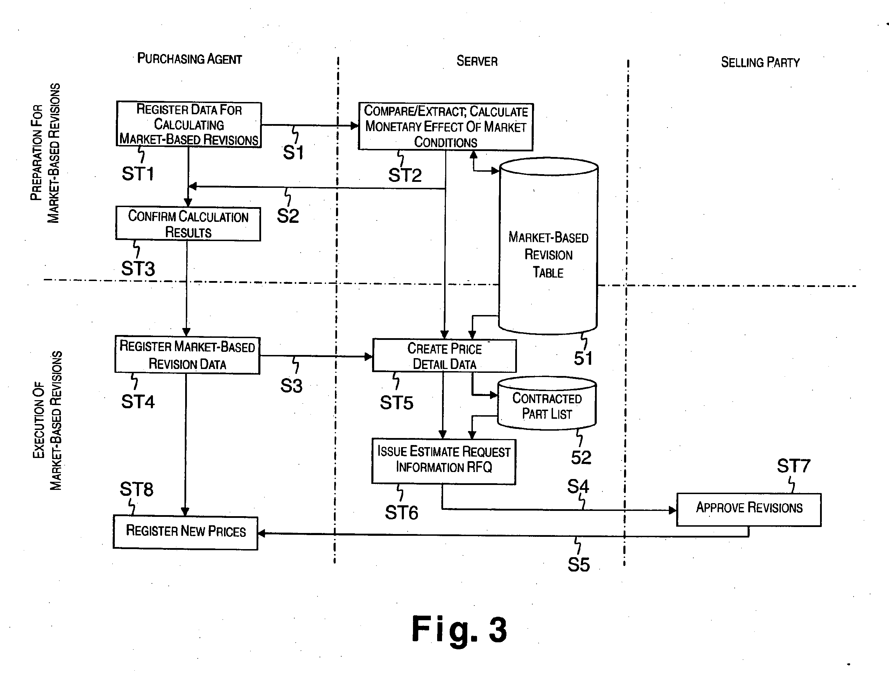

The details of the processing executed when the price revising system revises a price in accordance with the market conditions will now be described with reference to Figure 3.

First, in order to prepare for price revision in accordance with the market conditions, the market condition fluctuation inputting unit 21 is used to register data (the price fluctuation amount for each cost parameter) for calculating the market-based revision (step ST1) and the registered data S1 is sent to the purchasing support server 1. In other words, the market condition fluctuation inputting unit 21 is used by the ordering party or purchasing agent to input data pertaining to changes in pricing for materials, parts, etc. that are used in manufacturing the commodities or products and that are the subject of the existing or future contract between the seller and the purchaser.

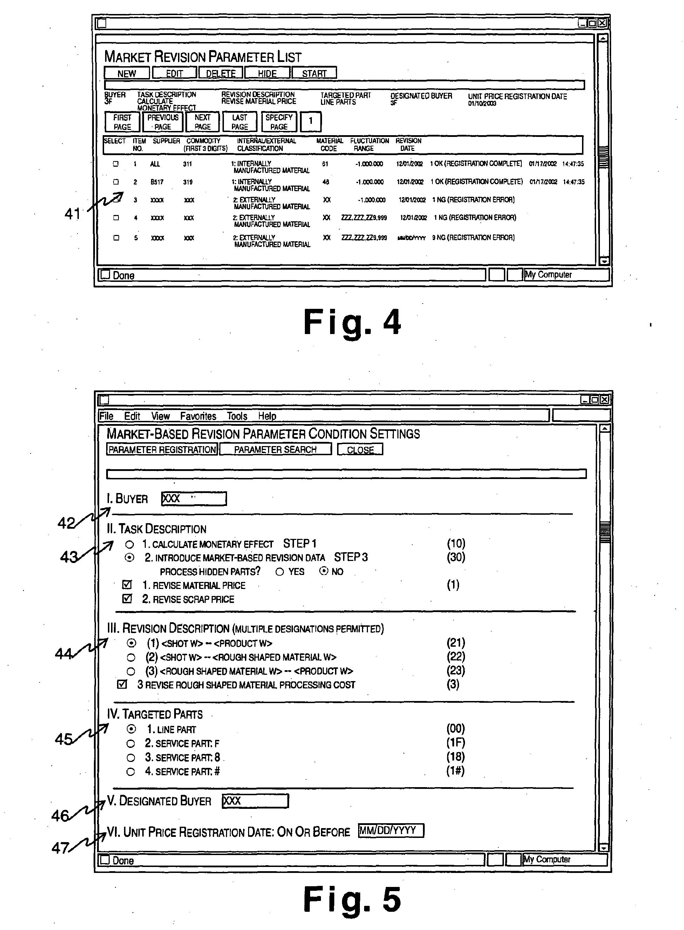

For the purpose of this data registration, a market-based revision parameter list (Figure 4) having a plurality of market-based revision parameters 41 is displayed as a main menu on the ordering party terminal 8. In other words, Figure 4 illustrates the main menu that is presented (displayed) to the purchasing agent when market-based revisions are to be made in the price revising system in accordance with the embodiment of the present invention. The market-based revision parameters 41 are displayed and organized into the following elements: a checkbox indicating if the cost parameter is selected or not selected, an item number, a supplier (selling party), a commodity indicating parts group, an internal/external classification, a material code, a fluctuation amount based on market conditions, a revision date, a registration status, etc. From this list in the display screen of the main menu shown in Figure 4, one of the market-based revision parameters 41 can be selected by the ordering party or purchasing agent. In particular, from the main menu on the ordering party terminal 8 shown in Figure 4, the purchasing agent can select to create new market-based revision parameter, edit an existing market-based revision parameter, and/or delete an existing market-based revision parameter

When the purchasing agent selects one of these market-based revision parameters 41, the display shifts to a screen such as the one shown in Figure 5, where the condition settings for the market-based revision parameters 41 can be registered or searched. For example, in Figure 5, a screen is displayed on the ordering party terminal 8 for prompting the purchasing agent to set market-based revision parameters in the price revising system in accordance with one embodiment of the present invention. In this example shown in Figure 5, the screen provides a buyer designating section 42, a task designating section 43, a revision designating section 44, a parts designating section 45, a designated buyer designating section 46, and a unit price registration date designating section 47. The information is then entered by the purchasing agent using the market condition fluctuation inputting unit 21 and a new or updated market-based revision parameter is generated.

As shown in Figure 5, by selecting the "calculate monetary effect" option in the task designating section 43, the price revising system shifts to a monetary effect calculation to recalculate or revise the market-based revision parameter(s) 41 based on the market conditions since the previous delivery results. By designating the "introduce market-based revision data" option in the task designating section 43, the market-based revision parameters 41 that were selected are then sent to the purchasing support server 1 to update the pricing for the commodity to be purchased in view of the changes in market condition of the materials, parts, etc that effect the market-based revision parameter 41 that was revised.

By designating the "revise material price" and "revise scrap price" options of the task designating section 43, the revisions based on market conditions can be further accomplished in terms of material required for manufacturing a product and terms of scrap generated when manufacturing a product. In addition to material and scrap, market-based revisions can also be conducted in terms of parts, small parts or other factors that would effect pricing.

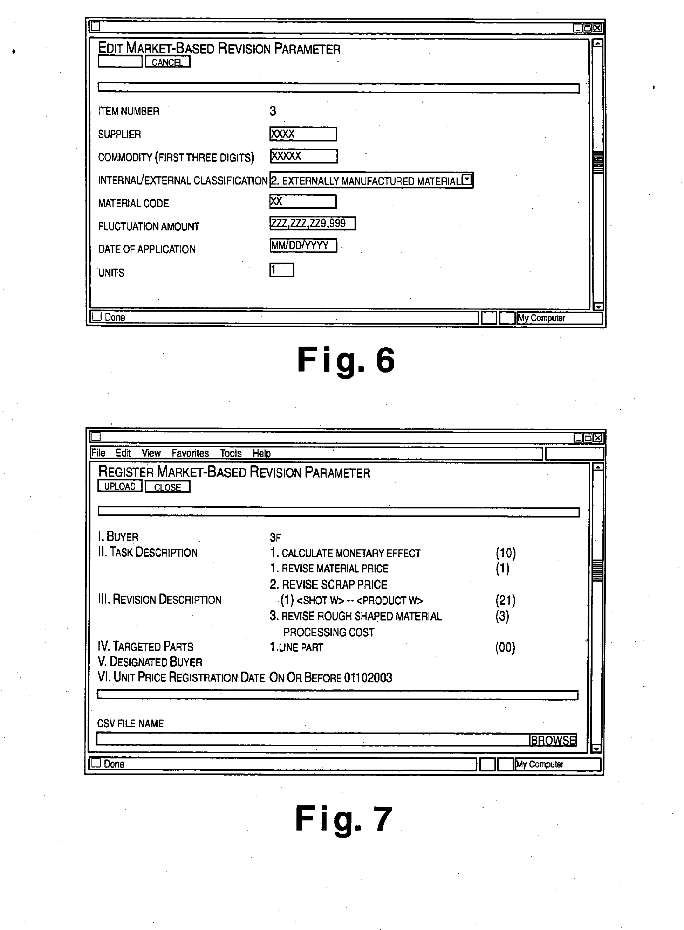

Furthermore, from the main menu screen shown in Figure 4, the ordering party or purchasing agent can access and display a screen like that shown in Figure 6 for each market-based revision parameter 41. In Figure 6, a screen is displayed on the ordering . party terminal 8 for prompting the purchasing agent to enter descriptive settings for a market-based revision parameter in a price revising system in accordance with the embodiment of the present invention. From this screen shown in Figure 6, it is possible for the designate one or more suppliers, the commodity, the internal/external classification, the material code, the fluctuation amount, the application date, and the units. Thus, this screen allows the ordering party or purchasing agent to enter a code to designate all selling parties have a contract for selling a commodity that contains the cost parameter that is being revised. Alternatively, the ordering party or purchasing agent to enter an individual code for each of the selling parties that will be sent the revised price. Also from this screen shown in Figure 6, it is possible to enter the market-based revision parameter 41 for the monetary effect calculation on a subsequent level.

Figure 7 illustrates a screen that enables market-based revision parameters to be stored and reviewed as market-based revision data in accordance with the embodiment of the present invention.

Next, after the screens shown in Figures 5 and 6 have been displayed and the changes to the market-based revision parameters 41 have been entered using the market condition fluctuation inputting unit 21, then the estimate/contract management unit 14 of the purchasing support server 1 compares the revised market-based revision parameters 41 with the prior market-based revision parameters stored in the market-based revision table 51 (Figure 3) and calculates the monetary effect of the market conditions. In other words, the monetary effect corresponding to the changes in the market conditions is calculated by referring to the stored values of the previous pricing for delivered commodities in the market-based revision table 51.

Regarding materials, the estimate/contract management unit 14 calculates the monetary effect by multiplying the metered material weight by the change in material unit cost determined based on the fluctuation amount. Meanwhile, regarding scrap, the estimate/contract management unit 14 calculates the monetary effect based on the change in the scrap unit cost and, regarding rough shaped material machining costs, it calculates the monetary effect by multiplying the rough shaped material weight by the fluctuation amount of the rough shaped material machining cost.

After calculating the monetary effects just described, the estimate/contract management unit 14 calculates the monetary effects with respect to the material cost subtotal, the machining cost subtotal, the parts cost subtotal, the purchased parts subtotal, and the material costs for each classification. When the estimate/contract management unit 14 calculates the purchased part subtotal, it adds the material cost subtotal, the machining cost subtotal, the parts cost subtotal, the die cost subtotal, management cost and profit subtotal, packing cost, and distribution cost.

After calculating these monetary effects, the estimate/contract management unit 14 sends the calculation results S2 (which constitute market-based revision data) to the ordering party terminal 8 as indicated in Figure 3 so that the calculation results S2 can be confirmed at the ordering party terminal 8 (step ST3). The calculation results are stored in the ordering party terminal 8 in, for example, CSV format (as shown in Figure 7) so that they can be referred to later as market-based revision data.

Now the processing steps for actually executing market-based price revisions with respect to each supplier will be described. These steps are executed after the monetary effects of the market-based price revisions have been computed as previously described.

First, in step ST4, the ordering party terminal 8 registers the market-based revision data S3, as previously described, and sends it to the estimate/contract management unit 14, thereby creating price detail data in the estimate/contract management unit 14 (step ST5). Among the materials and parts for which contracts exist, the estimate/contract management unit 14 identifies those materials and parts that will change according to the market-based revision data. The estimate/contract management unit 14 then refers to the estimate details managed by the code/estimate details management unit 15 and identifies the estimate details for which price revisions are necessary. The estimate/contract management unit 14 then revises the estimate details based on the market-based revision data, creates price detail data, and updates the unit prices stored in the contracted part list 52.

Next, in step ST6, the estimate/contract management unit 14 creates an estimate request information S4 that includes the content of the updated contracted part list 52 and sends the estimate request information S4 to the selling party terminals 6. The estimate request information S4 includes the monetary effect to the existing or future contract for a particular commodity or product. The monetary effect data includes monetary sums, component part details, material details, machining process details, and estimate fluctuation factor information related to all materials and parts. Editing of the estimate request information from the ordering party terminal 8 is prohibited.

The selling party terminal 6 displays the information contained in the estimate request information S4 and the selling party or agent checks the details of the market-based price revisions (step ST7). If the selling party agent approves the market-based price changes, the selling party agent sends a reply message S5 indicating the approval to the ordering party terminal 8 through the purchasing support server 1.

When the ordering party terminal 8 receives the reply message S5 indicating approval of the market-based price changes, in step ST8, the contract revising unit 25 executes processing to register the new prices as determined using the market-based revision data.

As described in detail heretofore, a purchasing work support system incorporating the present invention can calculate market-based revision data and urge price revisions quickly and automatically when, for example, the price of a material changes and affects parts and the like.

Also, with this price revising system, the monetary effects of each supplier can be calculated based on previous delivery results for each supplier (selling party) and the purchasing agent can determine the monetary effects on a per-supplier basis. For example, based on delivery results for the previous six months, the purchasing support server 1 can calculate the monetary effect for each seller (supplier) that will result from implementing market-based price revisions and display the calculation results on the selling party terminals 6. As a result, the selling parties can view the results of the price revisions immediately on the selling party terminals 6, thereby reducing the time and work associated with price revisions and enabling approval of prices revisions to be urged quickly and automatically.

Since this price revising system enables the monetary effects of the market conditions to be calculated separately for each part, each small part composing a particular part, each material, and each scrap, the purchasing agent and the selling parties can make even more accurate determinations regarding market-based price revisions, the system convenience is improved, and price revisions can be urged quickly and automatically.

Additionally, since this price revising system allows calculation results to be saved in the ordering party terminal 8, the time and work associated with accessing the screens shown in Figures 5 and 6 and entering data can be eliminated the next time market-based revisions are made and, thus, market-based price revisions can be accomplished even more quickly.

The term "configured" as used herein to describe a component, section or part of a device includes hardware and/or software that is constructed and/or programmed to carry out the desired function. Moreover, terms that are expressed as "means-plus function" in the claims should include any structure that can be utilized to carry out the function of that part of the present invention. Also, the terms of degree such as "substantially", "about", and "approximately" as used herein mean a reasonable amount of deviation of the modified term such that the end result is not significantly changed. For example, these terms can be construed as including a deviation of at least ± 5% of the modified term if this deviation would not negate the meaning of the word it modifies.

This application claims priority to Japanese Patent Application No. 2003-094534. The entire disclosure of Japanese Patent Application No. 2003-094534 is hereby incorporated herein by reference.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents. Thus, the scope of the invention is not limited to the disclosed embodiments.

## Claims

1. A price revising method for assisting an ordering party and one or more selling parties to revise a contract on a commodity, comprising:
displaying information to the ordering party prompting entry of the commodity and a price fluctuation amount relating to at least one cost parameter of the commodity;
calculating a monetary effect to the one or more selling parties for a case in which the price of the commodity is changed according to the fluctuation amount;
revising detailed price data according to the fluctuation amount to create a price revision for the commodity based on an existing order for the commodity that had been established between the one or more selling parties and the ordering party;
sending the price revision to the one or more selling parties for approval of the price revision; and
executing the price revision to produce a revised order by the ordering party in compliance with information indicating that the one or more selling parties has approved the price revision.

2. The price revising method as recited in claim 1, wherein
the displaying of information prompts the ordering party to enter the one or more selling parties to be associated with the price revision.

3. The price revising method as recited in claim 1 or 2, wherein
the displaying of information prompts entering the fluctuation amount in terms of at least one of the cost parameters including component parts for manufacturing the commodity, materials used in manufacturing the commodity, scrap generated when manufacturing the commodity.

4. The price revising method as recited in any one of claims 1 to 3, wherein
the displaying of information prompts entering the price fluctuation amount by presenting a chart that maps selling party information, commodity information, and fluctuation amount information.

5. The price revising method as recited in any one of claims 1 to 4, wherein
the displaying of information prompts the ordering party to enter a designation to associate all selling parties having contracts containing the cost parameter, such that the selling having contracts containing the cost parameter receive the price revision.

6. The price revising method as recited in any one of claims 1 to 5, wherein
the displaying of information prompts the ordering party to enter the commodity and the price fluctuation amount for each of a plurality of selling parties.

7. A price revising system for assisting an ordering party and one or more selling parties to revise a contract on a commodity, comprising:
an ordering party presenting section configured and arranged to present on an ordering party terminal a display prompting entry of the commodity and a price fluctuation amount relating to at least one cost parameter of the commodity;
a calculating section configured and arranged to calculate a monetary effect to the one or more selling parties for a case in which a cost of producing the commodity has changed according to the fluctuation amount entered from the ordering party terminal and making the calculated monetary effect available for comparison on the ordering party terminal;
a price revising section configured and arranged to create a price revision to detailed price data according to the fluctuation amount for the commodity based on an existing order of the commodity that has been established between the one or more selling parties and the ordering party, and to send the price revision to one or more selling party terminals; and
a selling party presenting section configured and arranged to present on the one or more selling party terminals a display prompting the one or more selling parties to approve the price revision, and to send information indicating that the one or more selling parties has approved the price revision back to the ordering party terminal.

8. The price revising system as recited in claim 7, wherein
the ordering party presenting section is further configured and arranged to present on the ordering party terminal a display prompting entry of at least one the one or more selling parties to be associated with the price revision.

9. The price revising system as recited in claim 7 or 8, wherein
the ordering party presenting section is further configured and arranged to present on the ordering party terminal a display prompting entry of the commodity and the price fluctuation amount for each of the one or more selling parties to be associated with the price revision.

10. The price revising system as recited in any one of claims 7 to 9, wherein
the calculating section is further configured and arranged to calculate the monetary effect for each of the selling parties to be associated with the price revision; and
the price revising section is further configured and arranged to execute price revisions for each of the selling parties to be associated with the price revision.

11. The price revising system as recited in any one of claims 7 to 10, wherein
the ordering party presenting section is further configured and arranged to present on the ordering party terminal a display prompting entry of the fluctuation amount in terms of at least one of the cost parameters including component parts for manufacturing the commodity, materials used in manufacturing the commodity, scrap generated when manufacturing the commodity.

12. The price revising system as recited in any one of claims 7 to 11, wherein
the ordering party presenting section is further configured and arranged to present on the ordering party terminal a display prompting entry of the price fluctuation amount by presenting a chart that maps selling party information, commodity information, and fluctuation amount information.
